Europäisches Patentamt

**European Patent Office**

**Office européen des brevets**

(11) Numéro de publication: **0 262 277**
A1

# (12) DEMANDE DE BREVET EUROPEEN

(21) Numéro de dépôt: 86402292.6

(22) Date de dépôt: 02.10.86

(51) Int. Cl.⁴: **G09F 9/30** , G02F 1/13

(43) Date de publication de la demande:
06.04.88 Bulletin 88/14

(84) Etats contractants désignés:
ES GR

(71) Demandeur: **Rioual, Patrick**
**81, rue Vercingetorix**
**F-75018 Paris(FR)**

(72) Inventeur: **Rioual, Patrick**
**81, rue Vercingetorix**
**F-75018 Paris(FR)**

(74) Mandataire: **Chevallier, Robert Marie Georges**
**et al**
**Cabinet BOETTCHER 23, rue La Boétie**
**F-75008 Paris(FR)**

(54) **Dispositif d'affichage à fibres optiques associées à des cristaux liquides.**

(57) Entre la source de lumière (10) et les faces extrêmes d'une extrémité des fibres (5) d'un faisceau de fibres optiques (12) est placée une matrice (3) de cellules de cristaux liquides qui sont réparties entre deux plaques ou afficheurs avec une disposition en damiers ce qui permet de mettre tangentiellement de manière simple et facile lesdites faces extrêmes du faisceau de fibres.

FIG 4

## Dispositif d'affichage à fibres optiques associées à des cristaux liquides.

L'invention a pour objet un dispositif d'affichage dont la surface de visualisation est constituée par l'ensemble des faces extrêmes d'un faisceau de fibres optiques, les faces extrêmes de la seconde extrémité des fibres de ce même faisceau étant accolées à une matrice de cellules de cristaux liquides dont le nombre et la disposition sont en correspondance avec ceux desdites faces extrêmes de cette seconde extrémité, un microprocesseur étant relié à ladite matrice pour contrôler le passage de la lumière à travers ces cristaux liquides. Avec ce montage chaque face extrême des fibres optiques constitue un point d'affichage appelé souvent pixel.

On sait que les cristaux liquides ont la propriété de se laisser ou non traverser par la lumière en fonction du signal électrique qui leur est appliqué. L'idée de les utiliser comme des obturateurs commandés devant des fibres optiques a déjà été proposée (voir le document US-A-4 299 447) mais une difficulté technique de réalisation n'a pas été surmontée et cette idée est restée inexploitée.

En effet, par suite d'impératifs de fabrication, les cellules d'une matrice de cristaux liquides sont espacées les unes des autres. Cet espace est variable et se situe aux alentours de cinquantes microns. Pour que la face extrême de chaque fibre du faisceau soit mise exactement en face en correspondance respectivement avec une cellule de cristaux liquides de la matrice, il faudrait également que les extrémités des fibres soient espacées les unes des autres de la même distance. Or, il est actuellement pratiquement impossible de respecter cet impératif dans la confection d'un faisceau de fibres optiques. De plus, la moindre erreur de positionnement d'une fibre par rapport à la cellule qui lui correspond entrave le bon fonctionnement du dispositif.

Le but principal de l'invention est d'apporter un dispositif du type défini ci-dessus dans lequel la difficulté technique mentionnée plus haut est totalement surmontée.

Dans un dispositif d'affichage comprenant une source de lumière, une matrice comprenant de nombreuses cellules de cristaux liquides placée devant cette source de lumière, un faisceau de fibres optiques ayant chacune à une première extrémité une face extrême disposée exactement en regard respectivement d'une cellule correspondante, et à une seconde extrémité une face extrême visible, les faces extrêmes visibles des fibres optiques étant disposées sur une surface de visualisation ou elles constituent chacune un point d'affichage selon l'invention la matrice des cellules de cristaux liquides comprend plusieurs plaques appelées afficheurs placées les unes à la suite des autres entre la source de lumière et le faisceau de fibres optiques et portant chacune respectivement une parties des cellules de cristaux liquides auxquelles correspondent un point d'affichage, cependant que les faces extrêmes des fibres optiques sont disposées tangentiellement les unes aux autres en regard desdites cellules 4 de cristaux liquides.

Les cellules de cristaux liquides utilisées par l'invention sont connues en soi et disponibles dans le commerce.

Selon une variante de l'invention des filtres colorés sont interposés entre la source de lumière et la matrice de cristaux liquides, ce qui permet de créer sur la surface de visualisation des images colorées.

De préférence, les plaques ou afficheurs de la matrice sont au nombre de deux sur lesquelles les cellules qui correspondent chacune à un point d'affichage sont disposées en damiers complémentaires, c'est-à-dire en damiers dont la projection sur un plan reconstitue un ensemble correspondant à l'ensemble des faces extrêmes correspondantes des fibres optiques.

On donnera maintenant une description d'un mode préféré de réalisation de l'invention. On se reportera aux dessins annexés dans lesquels :

-la figure 1 est une vue éclatée montrant - schématiquement une matrice de cellules de cristaux liquides réparties en damiers sur deux plaques et les faces extrêmes des fibres optiques d'un faisceau de fibres,

-la figure 2 est une vue éclatée montrant - schématiquement trois filtres colorés aux trois couleurs fondamentales et la matrice des cellules de cristaux liquides supposées superposées et supposées rendues transparentes à la lumière en certains points,

-la figure 3 montre la surface de visualisation qui correspond à la figure 2 ,

-la figure 4 est une vue générale de côté, - schématique, d'un dispositif selon l'invention.

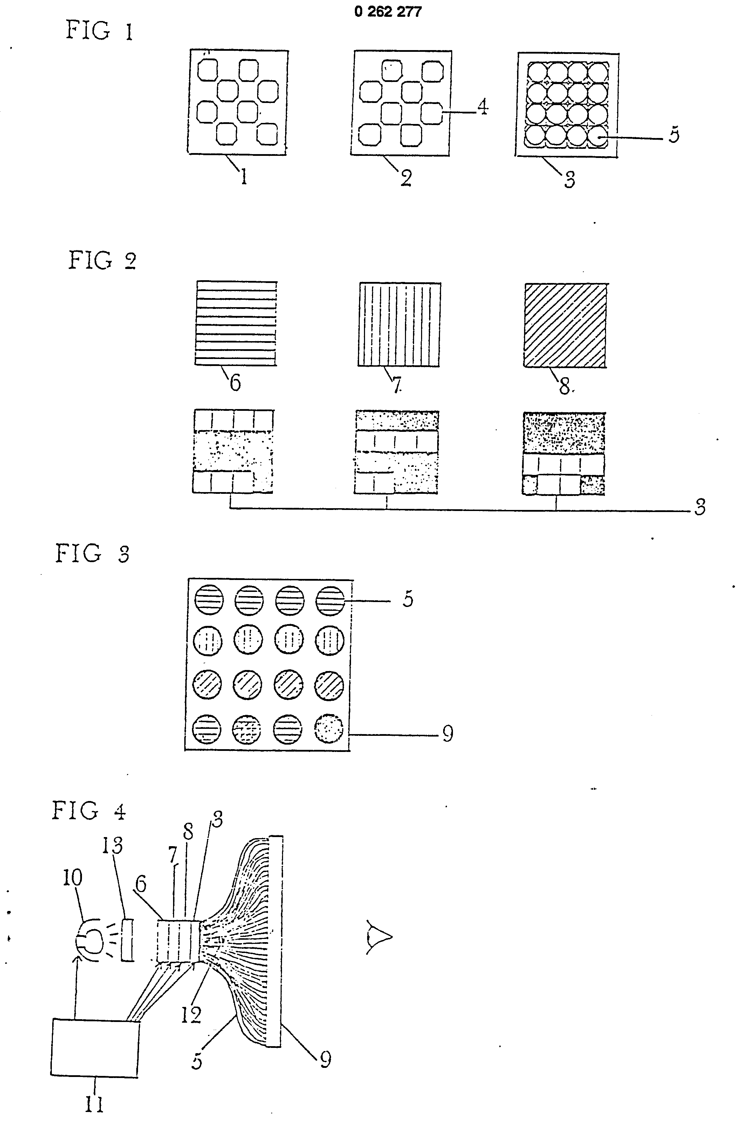

Sur la figure 1, les faces extrêmes des fibres 5 seront disposées jointivement ou tangentiellement comme il est facile de le faire.

La matrice 4 de cristaux liquides est composée de deux plaques 4 ayant chacune une partie des cellules disposées en damiers 1 et 2 qui sont complémentaires; après superposition on obtient une matrice dont la projection des cellules 4 coïncide parfaitement aux faces extrêmes jointives 5 du faisceau 12. On sait que les afficheurs à cristaux liquides sont constitués de deux fines plaques de verre entre lesquelles les différents éléments constitutifs sont pris en sanswich. La matrice 3 de l'invention peut être réalisée sur le même principe mais au moyen de trois plaques de verre dont la plaque centrale porte des électrodes sur ses deux faces opposées, ce qui permet d'obtenir les deux damiers complémentaires 1 et 2 sur un même afficheur. Un microprocesseur 11 gère ces deux damiers simultanément pour rendre les cellules 4 plus ou moins transparentes ou opaques.

Selon une caractéristique supplémentaire de l'invention, on place une série de filtres 6, 7 et 8 devant la matrice 3. Ces filtres sont réalisés à partir de cristaux liquides colorés connus disponibles dans le commerce. En fonction du signal électrique qui leur est appliqué, ces filtres ont la propriété de colorer ou non la lumière qui les traverse. On se reportera à la figure 2 pour décrire un affichage en couleurs, avec le dispositif de l'invention. Le motif à visualiser est décomposé en autant d'images colorées qu'il y a de filtres.

Pour chaque image, l'un des filtres 6,7 ou 8 colore la lumière, la matrice 3 adoptant sous la commande du microprocesseur 11 une configuration telle qu'elle ne se laisse traverser qu'aux endroits où la couleur du filtre est souhaitée ; cette opération s'effectue successivement pour chacun des filtres.

Quand ce processus est répété à une vitesse suffisamment élevée, grâce au phénomène de la persistance rétinienne, on ne perçoit pas les différentes images mais on "voit" dans sa totalité le motif coloré ainsi créé, (figure 3).

La configuration de la matrice 3 qui correspond au motif que l'on désire visualiser peut avoir été stockée dans une mémoire associée au microprocesseur 11, ou provenir d'une caméra ou tout autre système adapté.

Un dispositif complet est représenté sur la figure 4. L'éclairage est fourni par une source de lumière 10.

Il st possible de placer un filtre 13 pour arrêter les rayons infrarouges entre la lampe 10 et les cristaux liquides, afin de protéger ces derniers contre l'échauffement.

La couleur est obtenue grâce aux trois filtres 6, 7, 8 (par exemple un rouge, un bleu et un jaune). En l'absence de filtres, le dispositif de l'invention fonctionne en noir et blanc.

En faisant se succèder différentes vues de constitution d'un motif à une cadence convenable suffisamment rapide , il est possible de créer vingt cinq vues par seconde et d'obtenir ainsi un motif animé.

On expliquera maintenant plus en détail la disposition du faisceau de fibres optiques 12, (on utilisera de préférence de la fibre synthétique en raison de son faible coût et de sa plus grande maniabilité). Ce faisceau peut être utilisé comme simple guide d'images pour, par exemple, produire un affichage dans un milieu aquatique; il peut servir aussi à agrandir le motif affiché. A l'une des extrémités, les faces extrêmes des fibres 5 seront disposées côte à côte tangentiellement, chacune d'elles correspondant à une cellule 4 de la matrice 3, puis, tout en conservant le même ordonnancement, elles sont conduites jusqu'à la surface de visualisation 9. Sur celle-ci les faces extrêmes des fibres a cette seconde extrémité du faisceau correspondent à l'agrandissement voulu. Un intervalle de l'ordre du millimètre ne pose pas de problèmes pour la réalisation du faisceau, d'autant plus que de légères erreurs de positionnement n'auraient pas de conséquences sur le fonctionnement du système. L'utilisation des fibres est utile également par le fait qu'elles permettent d'augmenter l'angle de visualisation de l'affichage.

En fonction des besoins, divers moyens peuvent être adoptés pour réaliser cette surface de visualisation et ont déjà été décrits dans de nombreux brevets : thermoformage d'une lentille à l'extrémité des fibres pour obtenir une concentration du point lumineux, mise en place d'un verre dépoli... (voir brevets français n° 2.524.745 ; 2.530.850 ; ...).

L'assemblage de plusieurs dispositifs permet d'envisager la réalisation d'écrans géants d'un coût relativement bas.

## Revendications

1. Dispositif d'affichage comprenant une source de lumière (10), une matrice (3) comprenant de nombreuses cellules (4) de cristaux liquides placée devant cette source de lumière, un faisceau (2) de fibres optiques (5) ayant chacune à une première extrémité une face extrême disposée exactement en regard respectivement d'une cellule correspondante, et à une seconde extrémité une face extrême visible, les faces extrêmes visibles des fibres optiques (5) étant disposées sur une surface de visualisation (9) où elles constituent chacune un point d'affichage, caractérisé en ce que la matrice (3) des cellules de cristaux liquides (4) comprend plusieurs plaques (1, 2) appelées afficheurs placées les unes à la suite des autres entre la source de lumière (10) et le faisceau de fibres optiques (12) et portant chacune respectivement une partie des cellules (4) de cristaux liquides auxquelles correspond un point d'affichage, cependant que les faces extrêmes des fibres optiques (5) sont disposées tangentiellement en regard desdites cellules (4) de cristaux liquides.

2. Dispositif selon la revendication 1 caractérisé en ce que les plaques ou afficheurs de la matrice sont au nombre de deux sur lesquelles les cellules (4) qui correspondent chacune à un point d'affichage sont disposées en damiers complémentaires c'est-à-dire en damiers dont la projection sur un plan reconstitue un ensemble correspondant à l'ensemble des faces extrêmes correspondantes des fibres optiques.

3. Dispositif selon l'une quelconque des revendications 1, 2 caractérisé en ce que des filtres colorés (6, 7, 8) de cristaux liquides sont interposes entre la source de lumière (10) et la matrice (3) de cellules (4) de cristaux liquides, ces filtres colorés (6, 7, 8) étant gérés par un microprocesseur (11) et colorant, à tour de rôle, la lumière émise par la lampe (10) traversant la matrice (3).

4. Dispositif selon les revendications 3 et 4 caractérisé en ce que pour chacun des filtres (6, 7, 8), la matrice (3), gérée par le microprocesseur (11), adopte une configuration telle qu'elle ne laisse passer la lumière qu'aux endroits où la couleur du filtre est souhaitée, cette opération s'effectuant successivement pour chacune des couleurs sous le contrôle dudit microprocesseur (11).

10

FIG 1

4

1

2

3

5

FIG 2

6

7

8

3

FIG 3

5

9

FIG 4

13
10
8
7
6
3
11
12
5
9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 006 052  (SHARP K.K.) <br> * Revendication 1; page 11, lignes 11-27; figures 5-7 * | 1 | G 09 F  9/30 <br> G 02 F  1/13 |
| | --- | | |
| A | DE-A-3 148 421  (BLAUPUNKT-WERKE GmbH) <br> * Revendications 1,5; page 7, alinéa 1; figures 6,7 * | 1,2 | |
| | --- | | |
| A | GB-A-1 569 516  (K.K. SUWA SEIKOSHA) <br> * Page 4, lignes 81-108; figure 5 * | 1,3 | |
| | --- | | |
| A | GB-A-1 433 327  (PHILIP JOHN AXBEY) <br> * Revendications 1,6,10,11; figure 2 * | 1,3 | DOMAINES TECHNIQUES RECHERCHES (Int. Cl.4) |
| | --- | | G 09 F |
| E | FR-A-2 579 808  (P. RIOUAL) <br> * En entier * | 1-4 | G 02 F |
| | ----- | | |

Le présent rapport de recherche a été établi pour toutes les revendications

| Lieu de la recherche | Date d'achèvement de la recherche | Examinateur |
|---|---|---|
| LA HAYE | 11-06-1987 | FRANSEN L.J.L. |